# EUROPÄISCHE PATENTSCHRIFT

(11) **EP 3 607 437 B1**
(45) Veröffentlichungstag und Bekanntmachung des Hinweises auf die Patenterteilung: **24.02.2021**
(21) Anmeldenummer: 18714145.2
(22) Anmeldetag: 09.03.2018
(51) Int. Cl.: G06F 9/4401, B61L 15/00

(54) **VERFAHREN ZUM KONFIGURIEREN ZUMINDEST EINES GERÄTS EINES SCHIENENFAHRZEUGS IN EINEM NETZWERK, COMPUTERPROGRAMM UND COMPUTERLESBARES SPEICHERMEDIUM**
METHOD FOR CONFIGURING AT LEAST ONE DEVICE OF A RAILWAY VEHICLE IN A NETWORK, COMPUTER PROGRAM AND COMPUTER-READABLE STORAGE MEDIUM
PROCÉDÉ DE CONFIGURATION D'AU MOINS UN DISPOSITIF D'UN VÉHICULE FERROVIAIRE DANS UN RÉSEAU, PROGRAMME INFORMATIQUE ET SUPPORT D'ENREGISTREMENT LISIBLE PAR ORDINATEUR

(30) Priorität: 05.04.2017 DE 102017205786
(43) Veröffentlichungstag der Anmeldung: 12.02.2020
(73) Patentinhaber: Siemens Mobility GmbH, 81739 München (DE)
(72) Erfinder: BRAUN, Thorsten, 91088 Bubenreuth (DE)
(86) Internationale Anmeldenummer: PCT/EP2018/055865
(87) Internationale Veröffentlichungsnummer: WO 2018/184786

(56) Entgegenhaltungen:
- EP-A1- 1 065 128
- US-A1- 2008 259 945

## Beschreibung

Die Erfindung betrifft ein Verfahren zum Konfigurieren zumindest eines Geräts in einem Netzwerk, welches Netzwerk sich über ein erstes Schienenfahrzeug und ein mit dem ersten Schienenfahrzeug gekoppeltes zweites Schienenfahrzeug erstreckt und in welchem Netzwerk ein erster Server des ersten Schienenfahrzeugs und ein zweiter Server des zweiten Schienenfahrzeugs angeordnet sind.

Beim Koppeln zweier Schienenfahrzeuge werden die beiden Schienenfahrzeuge mechanisch miteinander verbunden. Außerdem werden die elektrischen Kontakte beider Schienenfahrzeuge zusammengefahren. Es wird ein Netzwerk aufgebaut, welches sich über beide Schienenfahrzeuge erstreckt. Jedes Gerät des ersten Schienenfahrzeuges, welches mit einem Gerät des zweiten Schienenfahrzeugs Daten austauschen möchte, kommuniziert mit einer Fahrzeugsteuerung des zweiten Schienenfahrzeugs, um Informationen über das mit diesem ersten Schienenfahrzeug gekoppelte zweite Schienenfahrzeug zu erhalten. Aufgrund der erhaltenen Informationen kann das jeweilige Gerät des ersten Schienenfahrzeugs in einer internen Datenbank Eigenschaften des zweiten Schienenfahrzeugs, insbesondere Eigenschaften der Geräte des zweiten Schienenfahrzeugs, abrufen. Erst dann ist es möglich, dass sich ein Gerät des ersten Schienenfahrzeugs mit einem Gerät des zweiten Schienenfahrzeugs zum Datenaustausch verbindet.

Die jeweilige interne Datenbank eines Geräts ist fest vorgegeben und wird nicht an Änderungen einer Fahrzeugkonfiguration angepasst. Aufgrund dessen kann es vorkommen, dass in der Datenbank ein Gerät oder gar ein ganzer Fahrzeugtyp nicht gelistet ist. Dann kann mit dem jeweiligen nicht gelisteten Gerät beziehungsweise mit dem nicht gelisteten Fahrzeugtyp keine Verbindung hergestellt werden.

US 2008/0259945 A1 beschreibt eine Kommunikationsschaltung zur Verwendung in einem Fahrzeug. Die Schaltung umfasst einen ersten Netzwerk-Port und einen zweiten Netzwerk-Port, der entfernt von dem ersten Netzwerk-Port angeordnet ist. Eine digitale Verbindung verbindet den ersten und zweiten Netzwerk-Port digital miteinander, um eine Kommunikation zwischen dem ersten und zweiten Netzwerk-Port zu ermöglichen. Insbesondere ist ein erster Zugwagen mit einem ersten LAN (Local Area Network) und ein zweiter Zugwagen mit einem zweiten LAN beschrieben. Die Zugwagen sind miteinander gekoppelt. Eine Steuereinheit des ersten LAN stellt eine Schnittstelle zu dem zweiten LAN über eine Zugkopplungsverbindung bereit.

Eine Aufgabe der Erfindung ist es, ein verbessertes Verfahren zum Konfigurieren zumindest eines Geräts in einem Netzwerk anzugeben, wobei sich das Netzwerk über zwei miteinander gekoppelte Schienenfahrzeuge erstreckt.

Die Aufgabe wird gelöst durch ein Verfahren zum Konfigurieren zumindest eines Geräts in einem Netzwerk, welches Netzwerk sich über ein erstes Schienenfahrzeug und ein mit dem ersten Schienenfahrzeug gekoppeltes zweites Schienenfahrzeug erstreckt und in welchem Netzwerk ein erster Server des ersten Schienenfahrzeugs und ein zweiter Server des zweiten Schienenfahrzeugs angeordnet sind. Bei dem erfindungsgemäßen Verfahren meldet zumindest der erste Server seine Existenz im Netzwerk. Erfindungsgemäß empfängt der zweite Server die Existenzmeldung des ersten Servers. Ein Gerät des zweiten Schienenfahrzeugs wird unter Verwendung der Existenzmeldung des ersten Servers zur Kommunikation mit einem bestimmten Gerät des ersten Schienenfahrzeugs konfiguriert.

Die Erfindung basiert auf der Idee, Informationen unabhängig von einer, insbesondere von jeder, Fahrzeugsteuerung der Schienenfahrzeuge auszutauschen. Auf diese Weise kann ein direkter Informationsaustausch zwischen den Servern stattfinden. Dadurch, dass der Informationsaustausch unabhängig von der bzw. den Fahrzeugsteuerung(en) erfolgt, kann die Sicherheit des Netzwerks erhöht werden. Insbesondere kann das Netzwerk auf diese Weise besser vor Hackerangriffen geschützt sein. Beispielsweise wirkt sich ein möglicher Hackerangriff auf eine der Fahrzeugsteuerungen vorzugsweise weder auf die Konfiguration noch auf die Kommunikation der Geräte untereinander aus.

Ein weiterer Vorteil ist, dass mit dem Verfahren zur Konfiguration des zu konfigurierenden Gerätes des zweiten Schienenfahrzeugs nicht auf eine interne Datenbank des zweiten Schienenfahrzeugs zugegriffen werden muss. Im Gegensatz kann die Konfiguration aufgrund der an das zweite Schienenfahrzeug übermittelten Existenzmeldung und ggf. aufgrund von an das zweite Schienenfahrzeug übermittelter weiterer Informationen stattfinden. Auf diese Weise ist nun eine Konfiguration eines Gerätes des zweiten Schienenfahrzeugs zu einer Kommunikation mit einem Gerät eines bisher unbekannten Fahrzeugs möglich. Weiter ist auf diese Weise eine Konfiguration eines Gerätes des zweiten Schienenfahrzeugs zu einer Kommunikation mit einem bisher unbekannten Gerät möglich.

Das Gerät des zweiten Schienenfahrzeugs, welches insbesondere zur Kommunikation konfiguriert wird, kann der Server des zweiten Schienenfahrzeugs sein. Weiter kann das Gerät des zweiten Schienenfahrzeugs zumindest eine Komponente des zweiten Schienenfahrzeugs sein. Die zu konfigurierende Komponente umfasst zweckmäßigerweise eine Software.

Vorzugsweise ist vorgegeben, welches Gerät des zweiten Schienenfahrzeugs konfiguriert werden soll. Beispielsweise kann mittels des zweiten Servers (des zweiten Schienenfahrzeugs) vorgeben werden/sein, welches der Geräte des zweiten Schienenfahrzeugs konfiguriert werden soll.

In dem Falle, dass das zu konfigurierende Gerät eine Komponente des zweiten Schienenfahrzeugs ist, kann der zweite Server die empfangene Existenzmeldung zumindest teilweise an die zu konfigurierende Komponente weitergeben.

Das Gerät des zweiten Schienenfahrzeugs wird zur Kommunikation mit einem bestimmten Gerät des ersten Schienenfahrzeugs konfiguriert. Das bestimmte Gerät des ersten Schienenfahrzeugs kann beispielsweise der Server des ersten Schienenfahrzeugs sein. Außerdem kann das bestimmte Gerät des ersten Schienenfahrzeugs zumindest eine der Komponenten des ersten Schienenfahrzeugs sein.

Weiter kann vorgegeben sein, welcher Gerätetyp das bestimmte Gerät des ersten Schienenfahrzeugs sein soll. Beispielsweise kann mittels des zweiten Servers (des zweiten Schienenfahrzeugs) vorgeben werden/sein, mit welchem Gerätetyp des ersten Schienenfahrzeugs das Gerät des zweiten Schienenfahrzeugs kommunizieren soll. Beispielsweise können diejenigen Geräte des ersten Schienenfahrzeugs, die dem vorgegebenen Gerätetyp entsprechen, als bestimmte Geräte ausgewählt werden. Zweckmä-ßigerweise ist das zumindest eine bestimmte Gerät zumindest eines der in dem ersten Schienenfahrzeug verfügbaren Geräte.

Eine der Komponenten, insbesondere jede Komponente, des ersten Schienenfahrzeugs kann eine Software umfassen. Weiter kann eine der Komponenten des ersten Schienenfahrzeugs Daten generieren. Beispielsweise kann eine der Komponenten des ersten Schienenfahrzeugs ein Sensor oder eine Kamera sein. Ferner kann eine der Komponenten des ersten Schienenfahrzeugs Daten empfangen. Beispielsweise kann eine der Komponenten des ersten Schienenfahrzeugs ein Datenwiedergabegerät, z.B. ein Lautsprecher oder ein Anzeigegerät, sein.

Vorzugsweise wird die Konfiguration mittels eines sogenannten Universal-Plug-and-Play Protokolls durchgeführt.

Vorzugsweise meldet der erste Server seine Existenz zyklisch. Auf diese Weise kann der Server seine Existenz in regelmäßigen Abständen melden. Weiter ist es bevorzugt, wenn der erste Server seine Existenz per Multicast-Verfahren meldet. Auf diese Weise kann der Server seine Existenz an alle im Netzwerk verfügbaren Geräte melden.

Beispielsweise kann die Existenzmeldung eine Identifikations-Information, insbesondere eine IP-Adresse und/oder eine Port-Adresse, umfassen. Vorzugsweise ist der erste Server über die Identifikations-Information erreichbar. Zweckmäßigerweise ist die Existenzmeldung serverspezifisch und/oder schienenfahrzeugspezifisch.

Erfindungsgemäß teilt der erste Server mit der Existenzmeldung eine Abruf-Information mit. Vorteilhafterweise umfasst die Abruf-Information einen URL (Uniform Resource Locator). Sinnvollerweise verweist die Abruf-Information, insbesondere die URL, auf den ersten Server.

Weiter ist es vorgesehen, dass der zweite Server aufgrund der mit der Existenzmeldung empfangenen Abruf-Information eine Geräte-Information über das zumindest eine bestimmte Gerät des ersten Schienenfahrzeugs abruft. Mittels dieser abgerufenen Geräte-Information wird zumindest ein Gerät des zweiten Schienenfahrzeugs zur Kommunikation mit dem zumindest einen bestimmten Gerät des ersten Schienenfahrzeugs konfiguriert.

Neben der Geräte-Information können aufgrund der empfangenen Existenzmeldung und/oder aufgrund der empfangenen Abruf-Information auch spezifische Informationen über das Schienenfahrzeug, beispielsweise eine Kennziffer des Schienenfahrzeugs, abgerufen werden.

Zweckmäßigerweise wird die Geräte-Information von einer außerhalb des zweiten Schienenfahrzeugs hinterlegten Datenbank abgerufen. Die Datenbank kann innerhalb des ersten Schienenfahrzeugs hinterlegt sein. Beispielsweise kann die Datenbank in dem ersten Server hinterlegt sein. Weiter kann die Datenbank in einem Datenspeicher des ersten Schienenfahrzeugs hinterlegt sein. Ferner kann die Datenbank in einer Cloud hinterlegt sein.

Vorzugsweise ruft der erste Server die Geräte-Information von der Datenbank ab. Weiter kann der erste Server die Geräte-Information an den zweiten Server weitergeben. Das heißt, vorzugsweise wird die Geräte-Information von dem zweiten Server abgerufen, indem der erste Server die Geräte-Information von der Datenbank abruft und an den zweiten Server weiterleitet. Auf diese Weise kann der zweite Server die Geräte-Information über den ersten Server abrufen. Es ist vorteilhaft, wenn der erste Server und der zweite Server direkt Informationen miteinander austauschen. Auf diese Weise kann eine direkte Kommunikation des zweiten Servers mit der Datenbank, welche vorzugsweise eine Datenbank des ersten Schienenfahrzeugs ist, unterbunden werden.

Die Datenbank kann bei einer Änderung einer Fahrzeugkonfiguration des ersten Schienenfahrzeugs aktualisiert werden. Auf diese Weise können aktuelle Geräte-Informationen angerufen werden. Insbesondere kann die Datenbank über ein Update-Verfahren aktualisiert werden. Beispielsweise kann die Datenbank mittels eines Service-Computers und/oder über einen verschlüsselten Kanal zu einer Leitstelle aktualisiert werden.

In dem Falle, dass das zu konfigurierende Gerät eine Komponente des zweiten Schienenfahrzeugs ist, kann der zweite Server die abgerufene Geräte-Information zumindest teilweise an die zu konfigurierende Komponente weitergeben. Beispielsweise kann der zweite Server die abgerufene Geräte-Information zumindest teilweise an die zu konfigurierende Komponente über das Netzwerk, über einen Webservice und/oder über eine Schnittstelle weitergeben. Insbesondere kann der zweite Server die abgerufene Geräte-Information zumindest teilweise an die zu konfigurierende Komponente unter Verwendung eines Protokolls weitergeben.

Der zweite Server empfängt die Existenzmeldung des ersten Servers. Vorzugsweise kann der zweite Server unter Verwendung der Existenzmeldung (des ersten Servers) auf eine Liste von mehreren in dem ersten Schienenfahrzeug verfügbaren Geräten zugreifen, insbesondere auf eine Liste aller in dem ersten Schienenfahrzeug verfügbaren Geräte.

Die Liste kann von dem zweiten Schienenfahrzeug, insbesondere von dem zweiten Server, erzeugt werden. Außerdem kann die Liste von dem zweiten Schienenfahrzeug, insbesondere von dem zweiten Server, empfangen werden. Weiter kann das erste Schienenfahrzeug die Liste an das zweite Schienenfahrzeug senden. Außerdem kann die Liste von einer außerhalb des zweiten Schienenfahrzeugs hinterlegten Datenbank abgerufen werden. Die letztgenannte Datenbank kann die zuvor genannte Datenbank sein.

Das zu konfigurierende Gerät des zweiten Schienenfahrzeugs kann unter Verwendung einer Geräte-Information über das zumindest eine bestimmte Gerät konfiguriert werden. Die Geräte-Information kann die zuvor genannte Geräte-Information sein.

Die Geräte-Information über das zumindest eine bestimmte Gerät des ersten Schienenfahrzeugs umfasst zweckmäßigerweise eine Typenbezeichnung dieses Geräts, eine Identifikationsbezeichnung dieses Geräts und/oder eine IP-Adresse dieses Geräts. Weiter kann die Geräte-Information (über dieses zumindest eine bestimmte Gerät) mittels diesen Geräts verfügbare Dienste, von diesem Gerät unterstützte Protokolle und/oder Schnittstellen dieses Geräts umfassen. Ferner kann die Geräte-Information (über dieses zumindest eine bestimmte Gerät) eine Version dieses Geräts und/oder eine Version einer Software dieses Geräts umfassen. Ferner kann die Geräte-Information Informationen über einen Datenbankanbieter (Host), welcher zweckmäßigerweise die zuvor genannte Datenbank bereitstellt, umfassen. Der Datenbankanbieter kann ein Hostrechner und/oder ein Online-Host sein.

Auch der zweite Server kann seine Existenz im Netzwerk melden. Dann empfängt zweckmäßigerweise der erste Server die Existenzmeldung des zweiten Servers. Ein Gerät des ersten Schienenfahrzeugs kann unter Verwendung der Existenzmeldung des zweiten Servers zur Kommunikation mit einem bestimmten Gerät des zweiten Schienenfahrzeugs konfiguriert werden. Diese Schritte können in analoger Weise wie zuvor beschrieben durchgeführt werden. Dabei kann in der vorhergehenden Beschreibung das erste Schienenfahrzeug die Rolle des zweiten Schienenfahrzeugs übernehmen und das zweite Schienenfahrzeug die Rolle des ersten Schienenfahrzeugs übernehmen.

Weiter ist die Erfindung auf ein Computerprogramm zum Konfigurieren zumindest eines Geräts in einem Netzwerk gerichtet. Das Netzwerk erstreckt sich über ein erstes Schienenfahrzeug und ein mit dem ersten Schienenfahrzeug gekoppeltes zweites Schienenfahrzeug. Außerdem sind in dem Netzwerk ein erster Server des ersten Schienenfahrzeugs und ein zweiter Server des zweiten Schienenfahrzeugs angeordnet.

Das erfindungsgemäße Computerprogramm umfasst Befehle, welche, wenn sie auf einem Computer ausgeführt werden, das oben beschriebene Verfahren ausführen.

Ferner ist die Erfindung auf ein computerlesbares Speichermedium mit dem zuvor genannten Computerprogramm gerichtet.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und der erfindungsgemäßen Vorrichtung kombinierbar. So sind Verfahrensmerkmale auch als Eigenschaft der entsprechenden Vorrichtungseinheit gegenständlich formuliert zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

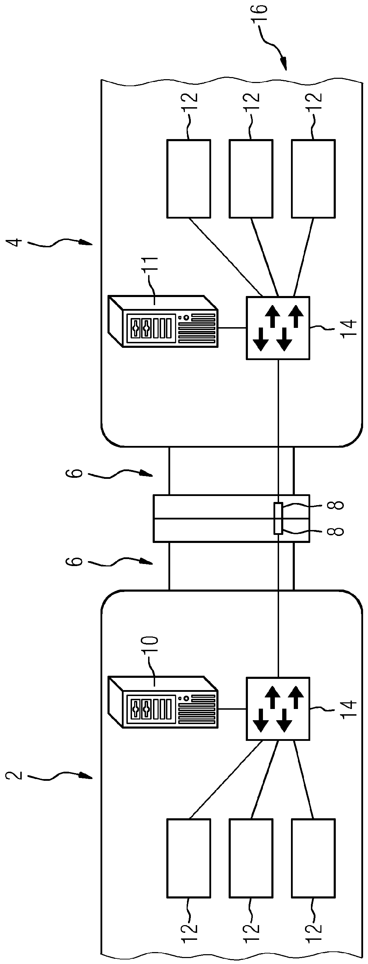

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird. Das Ausführungsbeispiel dient der Erläuterung der Erfindung und beschränkt die Erfindung nicht auf die darin angegebene Kombination von Merkmalen, auch nicht in Bezug auf funktionale Merkmale. Außerdem können dazu geeignete Merkmale des Ausführungsbeispiels auch explizit isoliert betrachtet, aus dem Ausführungsbeispiel entfernt und/oder mit einem beliebigen der Ansprüche kombiniert werden.

Es zeigt:
- Figur: zwei gekoppelte Schienenfahrzeuge, über welches sich ein Netzwerk erstreckt

In der einzigen Figur sind ein erstes Schienenfahrzeug 2 und ein zweites Schienenfahrzeug 4 gezeigt. Die beiden Schienenfahrzeuge 2, 4 sind miteinander gekoppelt. D. h. die beiden Schienenfahrzeuge 2, 4 sind mechanisch über ihre Bugkupplungen 6 miteinander verbunden. Außerdem sind elektrische Kontakte 8 beider Schienenfahrzeuge 2, 4, welche Kontakte 8 in der jeweiligen Bugkupplung 6 angeordnet sind, miteinander verbunden. Prinzipiell könnte die Verbindung auch kontaktlos erfolgen.

Das erste Schienenfahrzeug 2 weist einen ersten Server 10 auf. Außerdem weist das zweite Schienenfahrzeug 4 einen zweiten Server 11 auf. Weiter umfasst jedes der Schienenfahrzeuge 2, 4 jeweils mehrere Komponenten 12. In der Figur sind in jedem der Schienenfahrzeuge 2, 4 beispielhaft jeweils drei Komponenten 12 angeordnet. Prinzipiell ist aber auch jede andere Anzahl an Komponenten möglich. Eine jeweilige der Komponenten 12 kann z.B. eine Kamera, ein Wiedergabegerät (wie z.B. ein Lautsprecher, eine Anzeigetafel usw.), ein Sensor oder Ähnliches sein. Der Server 10, 11 eines jeden Schienenfahrzeugs 2, 4 ist mit den Komponenten 12 desselben Schienenfahrzeugs 2, 4 über ein Verteilelement 14 verbunden. Das jeweilige Verteilelement ist in diesem Ausführungsbeispiel jeweils ein Switch 14. Prinzipiell könnte jedes der Verteilelemente 14 aber auch ein Hub oder Ähnliches sein.

Die gezeigte Verschaltung des jeweiligen Servers 10, 11 mit den jeweiligen Komponenten 12 eines Schienenfahrzeugs 2, 4 ist beispielhaft zu sehen. Es ist auch eine andere Verschaltung möglich, z. B. eine Verschaltung, bei der die Komponenten 12 hinter den jeweiligen Servern 10, 11 hinterlagert sind.

Über beide Schienenfahrzeuge 2, 4 erstreckt sich ein Netzwerk 16. Die Server 10, 11 und die Komponenten 12 beider Schienenfahrzeuge 2, 4 sind in dem Netzwerk 16 angeordnet. Auch die Server 10, 11 beider Schienenfahrzeuge sind in diesem Fall in dem Netzwerk 16 angeordnet. Der Server 10 des ersten Schienenfahrzeugs 2 (im Folgenden auch "erster Server 10") ist dabei über die Kontakte 8 mit dem Server 11 des zweiten Schienenfahrzeugs 4 (im Folgenden auch "zweiter Server 11") verbunden. Insbesondere ist der Switch 14 des ersten Schienenfahrzeugs 2 mit dem Switch 14 des zweiten Schienenfahrzeugs 4 verbunden. D. h. der erste Server 10 ist mit dem zweiten Server 11 über die Switche 14 verbunden.

Zumindest eines der Geräte 11, 12 des zweiten Schienenfahrzeugs 4, d. h. der zweite Server 11 und/oder eine der Komponenten 12 des zweiten Schienenfahrzeugs 4, muss zur Kommunikation mit einem bestimmten Gerät 10, 12 (der Server 10 und/oder eine der Komponenten 12) des ersten Schienenfahrzeugs 2 konfiguriert werden. Beispielsweise wird eine Überwachungssoftware des zweiten Schienenfahrzeugs 4 zur Kommunikation mit bestimmten Komponenten 12 des ersten Schienenfahrzeugs 2, z. B. zur Kommunikation mit Kameras und/oder Sensoren des ersten Schienenfahrzeugs 2, konfiguriert. Die Überwachungssoftware ist in einem der Geräte 11, 12 des zweiten Schienenfahrzeugs 4 hinterlegt. Insbesondere kann die Überwachungssoftware auf dem zweiten Server 11 hinterlegt sein oder in einer der Komponenten 12 des zweiten Schienenfahrzeugs 4 hinterlegt sein.

Es werden die folgenden Schritte durchgeführt:
Zumindest der erste Server 10 meldet seine Existenz im Netzwerk 16. Dabei meldet der erste Server 10 seine Existenz zyklisch per Multicast-Verfahren. Bei der Existenzmeldung teilt der erste Server 10 eine Abruf-Information mit. Die Abruf-Information umfasst eine URL. Außerdem umfasst die Abruf-Information eine Identifikations-Information, beispielsweise eine IP-Adresse und/oder eine Port-Adresse. Zweckmäßigerweise ist der erste Server 10 über die mitgeteilte Identifikations-Information erreichbar.

Der zweite Server 11 empfängt die Existenzmeldung des ersten Servers 10. Aufgrund der mit der Existenzmeldung empfangenen Abruf-Information, insbesondere aufgrund der empfangenen URL, ruft der zweite Server 11 Geräte-Informationen über zumindest ein Gerät 10, 12 des ersten Schienenfahrzeugs 2, vorzugsweise über alle Geräte 10, 12 des ersten Schienenfahrzeugs 2, ab. Die Geräte-Informationen werden dabei von einer Datenbank abgerufen. Die Datenbank ist dabei außerhalb des zweiten Schienenfahrzeugs 4 hinterlegt. Beispielsweise kann die Datenbank im ersten Schienenfahrzeug 2, z.B. im ersten Server 10, hinterlegt sein. Zweckmäßigerweise wird die Datenbank bei einer Änderung einer Fahrzeugkonfiguration des ersten Schienenfahrzeugs aktualisiert. Auf diese Weise werden aktuelle Geräte-Informationen abgerufen.

Die (vom zweiten Server 11) abgerufenen Geräte-Informationen können eine Liste von zumindest mehreren in dem ersten Schienenfahrzeug 2 verfügbaren Geräten 10, 12 umfassen, insbesondere eine Liste aller in dem ersten Schienenfahrzeug 2 verfügbaren Geräte 10, 12.

Die Geräte-Information über zumindest ein Gerät 10, 12 des ersten Schienenfahrzeugs 2 umfasst eine Typenbezeichnung dieses Geräts 10, 12, eine Identifikationsbezeichnung dieses Geräts 10, 12 und/oder eine IP-Adresse dieses Geräts 10, 12. Weiter umfasst die Geräte-Information über dieses zumindest eine Gerät 10, 12 mittels diesen Geräts 10, 12 verfügbare Dienste, von diesem Gerät 10, 12 unterstützte Protokolle und/oder Schnittstellen dieses Geräts 10, 12 und ggf. ein Host. Ferner kann die Geräte-Information über dieses zumindest eine Gerät 10, 12 eine Version dieses Geräts und/oder eine Version der Gerätesoftware umfassen. Ferner kann die Geräte-Information Informationen über einen Datenbankanbieter (Host), welcher zweckmäßigerweise die zuvor genannte Datenbank bereitstellt, umfassen.

Mittels des zweiten Servers 11 wird vorgegeben, welches Gerät 11, 12 des zweiten Schienenfahrzeugs 4 konfiguriert werden soll. In diesem Beispiel soll das Gerät 11, 12 des zweiten Schienenfahrzeugs 4, welches die Überwachungssoftware umfasst, konfiguriert werden.

Außerdem wird mittels des zweiten Servers 11 vorgegeben, mit welchem Gerätetyp des ersten Schienenfahrzeugs 2 das Gerät 11, 12 des zweiten Schienenfahrzeugs 4 kommunizieren soll. Beispielsweise können diejenigen Geräte 10, 12 des ersten Schienenfahrzeugs 2, die dem vorgegebenen Gerätetyp entsprechen, als bestimmte Geräte 10, 12 ausgewählt werden.

Mittels der abgerufenen Geräte-Informationen wird zumindest ein Gerät 11, 12 des zweiten Schienenfahrzeugs 4 zur Kommunikation mit einem bestimmten Gerät 10, 12 des ersten Schienenfahrzeugs 2 konfiguriert. In diesem Beispiel wird das Gerät 11, 12 des zweiten Schienenfahrzeugs 4, welches die Überwachungssoftware umfasst, konfiguriert.

Das konfigurierte Gerät 11, 12 des zweiten Schienenfahrzeugs 4 kann dann mit dem bestimmten Gerät 10, 12 des ersten Schienenfahrzeugs 2 kommunizieren, d. h. Daten austauschen.

Beispielsweise kann das konfigurierte Gerät 11, 12 des zweiten Schienenfahrzeugs 4 eine Komponente 12 des zweiten Schienenfahrzeugs 4 sein. Weiter kann das bestimmte Gerät 10, 12 des ersten Schienenfahrzeugs 2 eine Komponente 12 des ersten Schienenfahrzeugs 2 sein. Im letzteren Fall kann die (konfigurierte) Komponente 12 des zweiten Schienenfahrzeugs 4 indirekt - also über zumindest einen der Server 10, 11 - oder auch direkt mit der Komponente 12 des ersten Schienenfahrzeugs kommunizieren.

In diesem Ausführungsbeispiel wird mittels des zweiten Servers 11 vorgegeben, dass die Überwachungssoftware des zweiten Schienenfahrzeugs 4 mit dem Gerätetyp "Kamera" des ersten Schienenfahrzeugs 2 kommunizieren soll. Entsprechend werden diejenigen Komponenten 12 des ersten Schienenfahrzeugs 2, die dem vorgegebenen Gerätetyp "Kamera" entsprechen, als bestimmte Geräte 12 ausgewählt.

Weiter wird in diesem Beispiel das Gerät 11, 12 des zweiten Schienenfahrzeugs 4, welches die Überwachungssoftware umfasst, zur Kommunikation mit denjenigen Komponenten 12 des ersten Schienenfahrzeugs 2, die jeweils dem vorgegebenen Gerätetyp "Kamera" entsprechen, konfiguriert.

Sowohl die Konfiguration als auch die Kommunikation sind unabhängig von einer Fahrzeugsteuerung der Schienenfahrzeuge 2, 4. Ein eventueller (Hacker-)Angriff auf die Fahrzeugsteuerung kann sich somit weder auf die Konfiguration zumindest eines der Geräts noch auf die Kommunikation der Geräte 10, 11, 12 untereinander auswirken. Somit wird die Sicherheit des Netzwerks 16 erhöht.

Obwohl die Erfindung im Detail durch das bevorzugten Ausführungsbeispiel näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung zu verlassen. Dieser Schutzumfang der Erfindung wird durch die angehängten unabhängigen Ansprüche definiert. Die abhängigen Ansprüche definieren bevorzugte Ausführungsbeispiele.

## Patentansprüche

1. Verfahren zum Konfigurieren zumindest eines Geräts (11, 12) in einem Netzwerk (16), welches Netzwerk (16) sich über ein erstes Schienenfahrzeug (2) und ein mit dem ersten Schienenfahrzeug (2) gekoppeltes zweites Schienenfahrzeug (4) erstreckt und in welchem Netzwerk (16) ein erster Server (10) des ersten Schienenfahrzeugs (2) und ein zweiter Server (11) des zweiten Schienenfahrzeugs (4) angeordnet sind,
bei welchem Verfahren
das erste und zweite Schienenfahrzeug (2, 4) beim Koppeln mechanisch miteinander verbunden werden und das Netzwerk (16) aufgebaut wird,
**dadurch gekennzeichnet, dass**
der erste Server (10) seine Existenz im Netzwerk (16) meldet, der zweite Server (11) die Existenzmeldung des ersten Servers (10) empfängt,
ein Gerät (11, 12) des zweiten Schienenfahrzeugs (4) unter Verwendung der Existenzmeldung des ersten Servers (10) zur Kommunikation mit zumindest einem bestimmten Gerät (10, 12) des ersten Schienenfahrzeugs (2) konfiguriert wird,
der erste Server (10) mit der Existenzmeldung eine Abruf-Information mitteilt,
der zweite Server (11) aufgrund der mit der Existenzmeldung empfangenen Abruf-Information eine Geräte-Information über das zumindest eine bestimmte Gerät (10, 12) des ersten Schienenfahrzeugs (2) abruft und
mittels dieser abgerufenen Geräte-Information zumindest ein Gerät (11, 12) des zweiten Schienenfahrzeugs (4) zur Kommunikation mit dem zumindest einen bestimmten Gerät (10, 12) des ersten Schienenfahrzeugs (2) konfiguriert wird.

2. Verfahren nach Anspruch 1,
**dadurch gekennzeichnet, dass**
das Gerät (11, 12) des zweiten Schienenfahrzeugs (4) der Server (11) des zweiten Schienenfahrzeugs (4) und/oder zumindest eine Komponente (12) des zweiten Schienenfahrzeugs (4) ist.

3. Verfahren nach Anspruch 1 oder 2,
**dadurch gekennzeichnet, dass**
das bestimmte Gerät (10, 12) des ersten Schienenfahrzeugs (2) der Server (10) des ersten Schienenfahrzeugs (2) und/oder zumindest eine Komponente (12) des ersten Schienenfahrzeugs (2) ist.

4. Verfahren nach einem der vorhergehenden Ansprüche,
**dadurch gekennzeichnet, dass**
die Konfiguration mittels eines Universal-Plug-and-Play-Protokolls veranlasst/durchgeführt wird.

5. Verfahren nach einem der vorhergehenden Ansprüche,
**dadurch gekennzeichnet, dass**
der erste Server (10) seine Existenz zyklisch per Multicast-Verfahren meldet.

6. Verfahren nach einem der vorhergehenden Ansprüche,
**dadurch gekennzeichnet, dass**
die Existenzmeldung eine Identifikations-Information, insbesondere eine IP-Adresse und/oder eine Port-Adresse, umfasst.

7. Verfahren nach einem der vorhergehenden Ansprüche,
**dadurch gekennzeichnet, dass**
die Abruf-Information einen URL ("Uniform Resource Locator") umfasst.

8. Verfahren nach einem der vorhergehenden Ansprüche,
**dadurch gekennzeichnet, dass**
die Geräte-Information von einer außerhalb des zweiten Schienenfahrzeugs (4) hinterlegten Datenbank abgerufen wird.

9. Verfahren nach einem der vorhergehenden Ansprüche,
**dadurch gekennzeichnet, dass**
die Geräte-Information von dem zweiten Server (11) abgerufen wird, indem der erste Server (10) die Geräte-Information von der Datenbank abruft und an den zweiten Server (11) weiterleitet.

10. Verfahren nach einem der vorhergehenden Ansprüche,
**dadurch gekennzeichnet, dass**
der zweite Server (11) unter Verwendung der Existenzmeldung des ersten Servers (10) auf eine Liste von zumindest mehreren in dem ersten Schienenfahrzeug (2) verfügbaren Geräten (10, 12) zugreift, insbesondere auf eine Liste aller in dem ersten Schienenfahrzeug (2) verfügbaren Geräte (10, 12).

11. Verfahren nach einem der vorhergehenden Ansprüche,
**dadurch gekennzeichnet, dass**
das zu konfigurierende Gerät (11, 12) des zweiten Schienenfahrzeugs (4) unter Verwendung einer Geräte-Information über das zumindest eine bestimmte Gerät (10, 11) konfiguriert wird,
wobei die Geräte-Informationen über das zumindest eine bestimmte Gerät (10, 12) des ersten Schienenfahrzeugs (2) eine Typenbezeichnung dieses Geräts (10, 12),
eine Identifikationsbezeichnung dieses Geräts (10, 12),
eine IP-Adresse dieses Geräts (10, 12),
mittels diesen Geräts (10, 12) verfügbare Dienste,
von diesem Gerät (10, 12) unterstützte Protokolle, Schnittstellen dieses Geräts (10, 12),
eine Version dieses Geräts (10, 12) und/oder
eine Version einer Software dieses Geräts (10, 12) umfassen.

12. Verfahren nach einem der vorhergehenden Ansprüche,
**dadurch gekennzeichnet, dass**
der zweite Server (11) seine Existenz im Netzwerk meldet,
der erste Server (10) die Existenzmeldung des zweiten Servers (11) empfängt und
ein Gerät (10, 12) des ersten Schienenfahrzeugs (2) unter Verwendung der Existenzmeldung des zweiten Servers (11) zur Kommunikation mit einem bestimmten Gerät (11, 12) des zweiten Schienenfahrzeugs (4) konfiguriert wird.

13. Computerprogramm zum Konfigurieren zumindest eines Geräts (11, 12) in einem Netzwerk (16), welches Netzwerk (16) sich über ein erstes Schienenfahrzeug (2) und ein mit dem ersten Schienenfahrzeug (2) gekoppeltes zweites Schienenfahrzeug (4) erstreckt und in welchem Netzwerk (16) ein erster Server (10) des ersten Schienenfahrzeugs (2) und ein zweiter Server (11) des zweiten Schienenfahrzeugs (4) angeordnet sind,
welches Computerprogramm Befehle umfasst, die, wenn sie auf einem Computer ausgeführt werden, das Verfahren nach einem der vorhergehenden Ansprüche realisieren.

14. Computerlesbares Speichermedium mit einem Computerprogramm nach Anspruch 13.

## Claims

1. Method for configuring at least one device (11, 12) in a network (16), which network (16) extends over a first rail vehicle (2) and a second rail vehicle (4) coupled to the first rail vehicle (2) and in which network (16) a first server (10) of the first rail vehicle (2) and a second server (11) of the second rail vehicle (4) are arranged,
in which method
the first and second rail vehicle (2, 4) are mechanically connected to one another during coupling and the network (16) is set up,
**characterised in that**
the first server (10) reports its existence in the network (16), the second server (11) receives the existence message from the first server (10),
a device (11, 12) of the second rail vehicle (4) is configured using the existence message from the first server (10) for communication with at least one specific device (10, 12) of the first rail vehicle (2),
the first server (10) communicates retrieval information with the existence message,
the second server (11) retrieves device information about the at least one specific device (10, 12) of the first rail vehicle (2) based on the retrieval information received with the existence message, and
by means of said retrieved device information, at least one device (11, 12) of the second rail vehicle (4) is configured for communication with the at least one specific device (10, 12) of the first rail vehicle (2).

2. Method according to claim 1,
**characterised in that**
the device (11, 12) of the second rail vehicle (4) is the server (11) of the second rail vehicle (4) and/or at least one component (12) of the second rail vehicle (4).

3. Method according to claim 1 or 2,
**characterised in that**
the specific device (10, 12) of the first rail vehicle (2) is the server (10) of the first rail vehicle (2) and/or at least one component (12) of the first rail vehicle (2).

4. Method according to one of the preceding claims,
**characterised in that**
the configuration is initiated/implemented by means of a universal plug-and-play protocol.

5. Method according to one of the preceding claims,
**characterised in that**
the first server (10) reports its existence cyclically via multicast methods.

6. Method according to one of the preceding claims,
**characterised in that**
the existence message comprises identification information, in particular an IP address and/or a port address.

7. Method according to one of the preceding claims,
**characterised in that**
the retrieval information comprises a URL ("Uniform Resource Locator").

8. Method according to one of the preceding claims,
**characterised in that**
the device information is retrieved from a database stored outside the second rail vehicle (4).

9. Method according to one of the preceding claims,
**characterised in that**
the device information is retrieved from the second server (11), **in that** the first server (10) retrieves the device information from the database and forwards it to the second server (11).

10. Method according to one of the preceding claims,
**characterised in that**
the second server (11), using the existence message from the first server (10), accesses a list of at least a plurality of devices (10, 12) available in the first rail vehicle (2), in particular a list of all devices (10, 12) available in the first rail vehicle (2).

11. Method according to one of the preceding claims,
**characterised in that**
the device (11, 12) of the second rail vehicle (4) to be configured is configured using device information about the at least one specific device (10, 11),
wherein the device information about the at least one specific device (10, 12) of the first rail vehicle (2) comprises a type designation of said device (10, 12),
an identification number of said device (10, 12),
an IP address of said device (10, 12),
services available by means of said device (10, 12), protocols supported by said device (10, 12),
interfaces of said device (10, 12),
a version of said device (10, 12) and/or
a version of software of said device (10, 12).

12. Method according to one of the preceding claims,
**characterised in that**
the second server (11) reports its existence in the network, the first server (10) receives the existence message from the second server (11) and
a device (10, 12) of the first rail vehicle (2) is configured using the existence message of the second server (11) for communication with a specific device (11, 12) of the second rail vehicle (4).

13. Computer program for configuring at least one device (11, 12) in a network (16), which network (16) extends over a first rail vehicle (2) and a second rail vehicle (4) coupled to the first rail vehicle (2) and in which network (16) a first server (10) of the first rail vehicle (2) and a second server (11) of the second rail vehicle (4) are arranged,
which computer program comprises commands which, when executed on a computer, implement the method according to one of the preceding claims.

14. Computer-readable storage medium with a computer program according to claim 13.

## Revendications

1. Procédé de configuration d'au moins un appareil (11, 12) dans un réseau (16) lequel réseau (16) s'étend sur un premier véhicule (2) ferroviaire et sur un deuxième véhicule (4) ferroviaire attelé au premier véhicule (2) ferroviaire, et dans lequel réseau (16) sont disposés un premier serveur (10) du premier véhicule (2) ferroviaire et un deuxième serveur (11) du deuxième véhicule (4) ferroviaire,
procédé dans lequel
on relie entre eux mécaniquement lors de l'attelage le premier et le deuxième véhicules (2, 4) ferroviaires et on constitue le réseau (16),
**caractérisé en ce que**
le premier serveur (10) annonce son existence dans le réseau (16),
le deuxième serveur (11) reçoit le message d'existence du premier serveur (10),
on configure un appareil (11, 12) du deuxième véhicule (4) ferroviaire, en utilisant le message d'existence du premier serveur (10), pour la communication avec au moins un appareil (10, 12) déterminé du premier véhicule (2) ferroviaire,
le premier serveur (10) fait part avec le message d'existence d'une information d'appel,
le deuxième serveur (11) appelle, sur la base de l'information d'appel reçue avec le message d'existence, une information d'appareil sur le au moins un appareil (10, 12) déterminé du premier véhicule (2) ferroviaire et
au moyen de cette information d'appareil appelée, on configure au moins un appareil (11, 12) du deuxième véhicule (4) ferroviaire pour la communication avec le au moins un appareil (10, 12) déterminé du premier véhicule (2) ferroviaire.

2. Procédé suivant la revendication 1,
**caractérisé en ce que**
l'appareil (11, 12) du deuxième véhicule (4) ferroviaire est le serveur du deuxième véhicule (4) ferroviaire et/ou au moins un composant (12) du deuxième véhicule (4) ferroviaire.

3. Procédé suivant l'une des revendications 1 ou 2,
**caractérisé en ce que**
l'appareil (10, 12) déterminé du premier véhicule (2) ferroviaire est le serveur (10) du premier véhicule (2) ferroviaire et/ou au moins un composant (12) du premier véhicule (2) ferroviaire.

4. Procédé suivant l'une des revendications précédentes,
**caractérisé en ce que**
on provoque/effectue la configuration au moyen d'un programme universal-plug-and-play.

5. Procédé suivant l'une des revendications précédentes,
**caractérisé en ce que**
le premier serveur (10) annonce son existence de manière cyclique par un procédé multicast.

6. Procédé suivant l'une des revendications précédentes,
**caractérisé en ce que**
le message d'existence comprend une information d'identification, notamment une adresse IP et/une adresse de port.

7. Procédé suivant l'une des revendications précédentes,
**caractérisé en ce que**
l'information d'appel comprend un URL ("Uniform Resource Locator").

8. Procédé suivant l'une des revendications précédentes,
**caractérisé en ce que**
on appelle l'information d'appareil dans une base de données mise en mémoire à l'extérieur du deuxième véhicule (4) ferroviaire.

9. Procédé suivant l'une des revendications précédentes,
**caractérisé en ce que**
on appelle l'information d'appareil par le deuxième serveur (11) par le fait que le premier serveur (10) appelle l'information d'appareil dans la base de données et l'achemine au deuxième serveur (11).

10. Procédé suivant l'une des revendications précédentes,
**caractérisé en ce que**
le deuxième serveur (11) accède, en utilisant le message d'existence du premier serveur (10), à une liste d'au moins plusieurs appareils (10, 12) disponibles dans le premier véhicule (2) ferroviaire, notamment à une liste de tous les appareils (10, 12) disponibles dans le premier véhicule (2) ferroviaire.

11. Procédé suivant l'une des revendications précédentes,
**caractérisé en ce que**
on configure l'appareil (11, 12) à configurer du deuxième véhicule (4) ferroviaire, en utilisant une information d'appareil sur le au moins un appareil (10, 11) déterminé,
dans lequel les informations d'appareil sur le au moins un appareil (10, 12) déterminé du premier véhicule (2) ferroviaire comprennent une caractérisation de type de cet appareil (10, 12),
une caractérisation d'identification de cet appareil (10, 12), une adresse IP de cet appareil (10, 12),
des services disponibles au moyen de cet appareil (10, 12), des programmes effectués avec l'assistance de cet appareil (10, 12),
des interfaces de cet appareil (10, 12)
une version de cet appareil (10, 12) et/une version d'un logiciel de cet appareil (10,12).

12. Procédé suivant l'une des revendications précédentes,
**caractérisé en ce que**
le deuxième serveur (11) annonce son existence dans le réseau, le premier serveur (10) reçoit le message d'existence du deuxième serveur (11) et
on configure un appareil (10, 12) du premier véhicule (2) ferroviaire, en utilisant le message d'existence du deuxième serveur (11), pour la communication avec un appareil (11, 12) déterminé du deuxième véhicule (4) ferroviaire.

13. Programme d'ordinateur pour la configuration d'au moins un appareil (11, 12) dans un réseau (16), lequel réseau (16) s'étend sur un premier véhicule (2) ferroviaire et sur une deuxième véhicule (4) ferroviaire attelé au premier véhicule (2) ferroviaire, et dans lequel réseau (16) sont disposés un premier serveur (10) du premier véhicule (2) ferroviaire et un deuxième serveur (11) du deuxième véhicule (4) ferroviaire, lequel programme d'ordinateur comprend des instructions qui, lorsqu'elles sont exécutées sur un ordinateur, réalisent le procédé suivant l'une des revendications précédentes.

14. Support de mémoire déchiffrable par ordinateur ayant un programme d'ordinateur suivant la revendication 13.
